(19) Europäisches Patentamt
European Patent Office
Office européen des brevets

(11) EP 2 863 468 B1

(12) **EUROPEAN PATENT SPECIFICATION**

(45) Date of publication and mention of the grant of the patent:
**09.08.2017 Bulletin 2017/32**

(21) Application number: **13804501.8**

(22) Date of filing: **10.06.2013**

(51) Int Cl.:
***H01M 10/0567*** *(2010.01)* ***H01M 10/052*** *(2010.01)*
***H01M 10/0568*** *(2010.01)* *H01M 10/0569* *(2010.01)*

(86) International application number:
**PCT/JP2013/066004**

(87) International publication number:
**WO 2013/187379 (19.12.2013 Gazette 2013/51)**

(54) **ELECTROLYTE FOR NON-AQUEOUS ELECTROLYTE BATTERY, AND NON-AQUEOUS ELECTROLYTE BATTERY USING SAME**

ELEKTROLYT FÜR BATTERIEN MIT NICHTWÄSSRIGEM ELEKTROLYT UND BATTERIE MIT DIESEM NICHTWÄSSRIGEN ELEKTROLYT

ÉLECTROLYTE DESTINÉ À UN ACCUMULATEUR À ÉLECTROLYTE NON AQUEUX, ET ACCUMULATEUR À ÉLECTROLYTE NON AQUEUX UTILISANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2012 JP 2012133553**
**20.05.2013 JP 2013105746**
**20.05.2013 JP 2013105784**
**07.06.2013 JP 2013120485**

(43) Date of publication of application:
**22.04.2015 Bulletin 2015/17**

(73) Proprietor: **Central Glass Company, Limited**
**Yamaguchi 755-0001 (JP)**

(72) Inventors:
- **KONDO, Yuki**
**Ube-shi**
**Yamaguchi 755-0001 (JP)**
- **KUBO, Makoto**
**Ube-shi**
**Yamaguchi 755-0001 (JP)**
- **MORINAKA,Takayoshi**
**Ube-shi**
**Yamaguchi 755-0001 (JP)**
- **YAMAMOTO, Kenta**
**Ube-shi**
**Yamaguchi 755-0001 (JP)**

(74) Representative: **Manitz Finsterwald Patentanwälte PartmbB**
**Martin-Greif-Strasse 1**
**80336 München (DE)**

(56) References cited:
**WO-A1-2012/039251** **JP-A- 2004 071 458**
**JP-A- 2010 272 376** **JP-A- 2011 054 406**
**JP-A- 2011 192 580** **JP-A- 2012 089 468**
**US-A1- 2005 170 254** **US-A1- 2010 015 514**
**US-A1- 2011 206 997** **US-A1- 2012 082 890**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 863 468 B1

## Description

Technical Field

The present invention relates to an electrolyte for non-aqueous electrolyte battery, which constitutes a non-aqueous electrolyte secondary battery superior in cycle characteristic and in the effect of suppressing the increase of internal resistance, and a non-aqueous electrolyte battery using the same.

### Background of the Invention

Recently, electrical storage systems for information-related equipment or telecommunication equipment, i.e., electrical storage systems for equipment having a small size and requiring a high energy density, such as personal computers, video cameras, digital still cameras and cellular phones, as well as electrical storage systems for equipment having a large size and requiring a high electric power, such as electric automobiles, hybrid vehicles, auxiliary power supplies for fuel cell vehicles and electricity storages, have been attracting attentions.

Many of these non-aqueous electrolyte batteries have already been put to practical use. There occur, however, the decrease of electric capacitance and the increase of internal resistance by repeating charging and discharging. For such reason, the performance of non-aqueous electrolyte batteries has some problems in an application requiring a prolonged use, such as power source of motor vehicles.

Until now, as a means for improving various properties of non-aqueous electrolyte batteries, optimizations of various battery components including the active materials of the cathode and the anode have been examined. Non-aqueous electrolyte related-technologies are not their exception, either. Various additives have been proposed. Among them, adding a silicon compound to the electrolyte has been considered. For example, in Patent Publication 1, there has been proposed a method of improving the cycle characteristic by adding tetramethyl silicate to the electrolyte. In Patent Publication 2, there has been proposed an electrolyte obtained by adding an organic silicon compound having a Si-N bond(s). Also, in Patent Publications 3-7, additives having a siloxane (-Si-O-Si-) structure have been proposed.

WO 2012/039251 A1 relates to a nonaqueous electrolyte for a secondary battery that contains a metal salt containing metal ions belonging to group 1 or group 2 of the periodic table and at least one silicon compound selected from a group represented by the general formula $SiR^2_2(OR^1)_2$ and by the general formula $SiR^2_2(OR^1)$-O- $SiR^2_2(OR^1)$.

JP 2012-089,468 A discloses an electrolyte for a nonaqueous secondary battery which contains the salt of metal ion of group I or II of the periodic table and a siloxane oligomer containing a structure represented by the formula $-SiR^1(OR^2)O-$ and having a number-average molecular weight in the range of 500 to 1500 in terms of styrene.

US 2010/015514 A1 relates to a lithium secondary battery comprising: an electrode group comprising a positive electrode, a negative electrode, and a microporous film separator interposed between the electrodes; and a nonaqueous electrolyte comprising a nonaqueous solvent and a lithium salt contained therein, the electrode group and the nonaqueous electrolyte being held in a battery case, and the positive electrode and the negative electrode each comprising a current collector and, formed thereon, an active-material layer comprising an active material capable of occluding/releasing a lithium ion, wherein the nonaqueous electrolyte is a nonaqueous electrolyte comprising at least one cyclic siloxane compound.

An electrolyte including a cyclic siloxane compound is also known from US 2012/082890 A1.

US 2005/0170254 A1 describes an electrochemical device, comprising an electrolyte including a disiloxane having a backbone with a first silicon and a second silicon, the first silicon being linked to a first substituent that includes a cyclic carbonate moiety or a poly(alkylene oxide) moiety.

A nonaqueous electrolyte containing trans-difluoroethylene carbonate is known from JP 2011-054,406 A.

US 2011/0206997 A1 relates to a non-aqueous electrolyte solution for a lithium secondary battery, which includes a lithium salt and an organic solvent, wherein the non-aqueous electrolyte solution further includes a solvent having a fluoro group and a siloxane compound

Prior Art Publications

Patent Publications

Patent Publication 1: Japanese Patent Application Publication 10-326611
Patent Publication 2: Japanese Patent Application Publication 11-016602
Patent Publication 3: Japanese Patent Application Publication 8-078053
Patent Publication 4: Japanese Patent Application Publication 2002-134169

Patent Publication 5: Japanese Patent Application Publication 2004-071458
Patent Publication 6: Japanese Patent Application Publication 2007-141831
Patent Publication 7: Japanese Patent Application Publication 2010-092748

**Summary of the Invention**

The additives described in Patent Publications 1 and 2 can suppress the deterioration of the battery to some degree. It was, however, not enough for the cycle characteristic. Furthermore, there were the improvements of cycle characteristic and of output characteristic by suppressing the increase of internal resistance, by the additives having a siloxane structure described in Patent Publications 3-7. On the other hand, these siloxane compounds are easily decomposed by a reaction with lithium hexafluorophosphate as a solute of the electrolyte, thereby causing the change of the concentration of lithium hexafluorophosphate, too. Therefore, the electrolyte product was unstable. A buttery using this electrolyte had a defect of having a variation in its battery characteristic and therefore was not sufficiently satisfactory.

In electrolytes prepared by adding a siloxane compound, which are capable of demonstrating a superior cycle characteristic and the effect of suppressing the increase of internal resistance (hereinafter, may be described as "internal resistance characteristic"), the present invention provides an electrolyte for non-aqueous electrolyte batteries, in which storage stability after preparing an electrolyte product as having been a task can be improved as compared with electrolytes prepared by adding conventional siloxane compounds, and provides a non-aqueous electrolyte battery using this.

That is, in case that a siloxane compound of a specific structure is added to an electrolyte, and then the resulting electrolyte is used for a non-aqueous electrolyte battery, the present invention provides an electrolyte for non-aqueous electrolyte batteries, in which superior cycle characteristic and internal resistance characteristic can be demonstrated, and storage stability of the electrolyte product can be improved by suppressing reactivity with lithium hexafluorophosphate, as compared with electrolytes prepared by adding conventional siloxane compounds, and provides a non-aqueous electrolyte battery using this.

In view of such a problem, as a result of an ardent study, in case that a specific siloxane compound is contained in a non-aqueous electrolyte for non-aqueous electrolyte batteries, which contains a non-aqueous solvent and a lithium hexafluorophosphate-containing solute, and then the resulting electrolyte is used for a non-aqueous electrolyte battery, the present inventors have found that superior cycle characteristic and internal resistance characteristic can be demonstrated and that it becomes possible to suppress reactivity of the siloxane compound with lithium hexafluorophosphate and thereby storage stability of the electrolyte product can be improved as compared with electrolytes prepared by adding conventional siloxane compounds, thereby reaching the present invention.

That is to say, the present invention provides a non-aqueous electrolyte for non-aqueous electrolyte battery containing a non-aqueous solvent and a solute, the non-aqueous electrolyte for non-aqueous electrolyte battery containing at least lithium hexafluorophosphate as the solute, the electrolyte for non-aqueous electrolyte battery (hereinafter it is described simply as "non-aqueous electrolyte" or "electrolyte" in some cases) being characterized by containing at least one siloxane compound, wherein the at least one siloxane compound is one with one of the following chemical formulae:

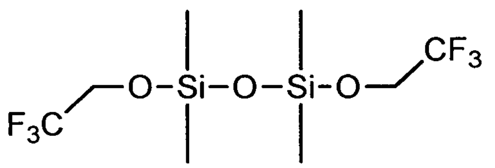

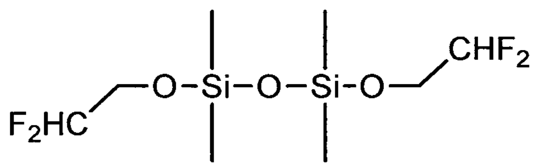

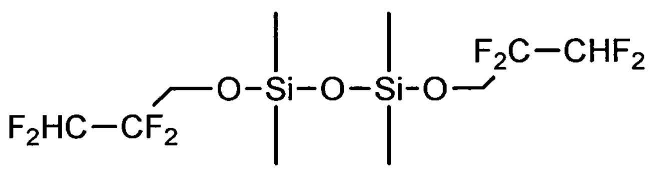

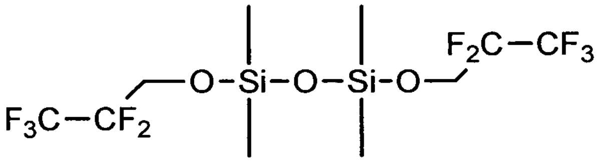
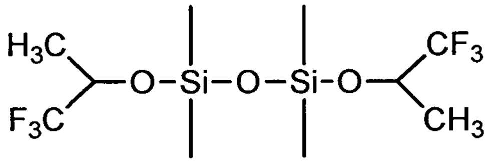

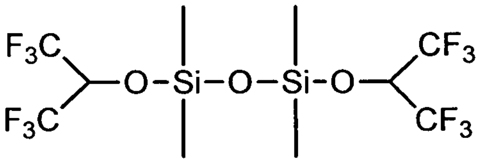
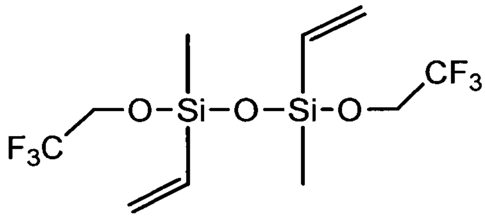

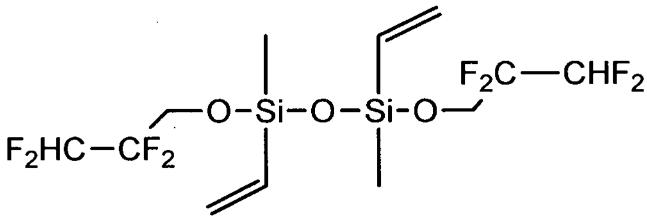

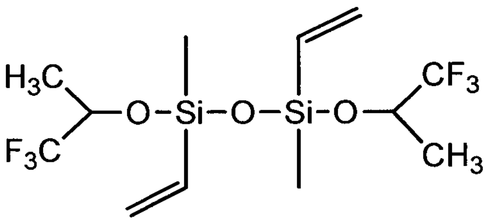
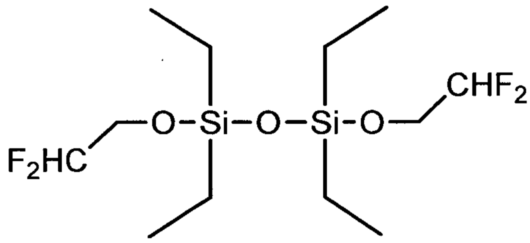

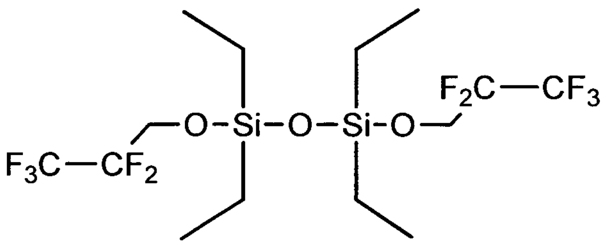
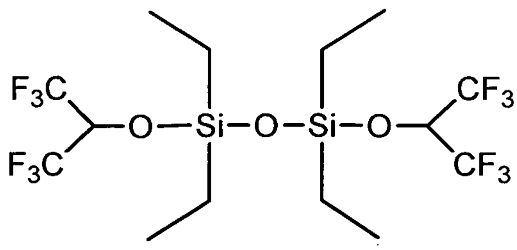

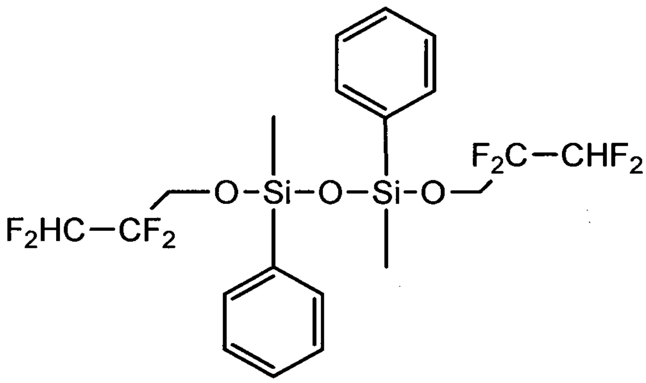

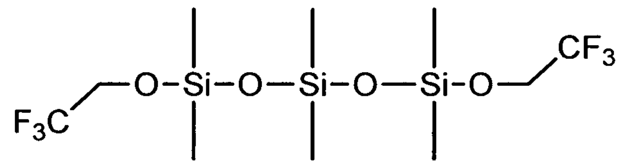

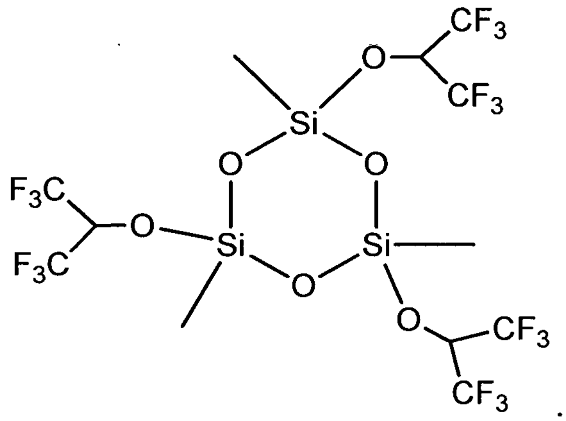

It is preferable that the addition amount of the above siloxane compound is within a range of 0.01-5.0 mass% to the total amount of the non-aqueous electrolyte for non-aqueous electrolyte battery.

Furthermore, the above solute may include a solute besides lithium hexafluorophosphate. As other solutes, it is possible to cite lithium tetrafluoroborate ($LiBF_4$), lithium bis(fluorosulfonyl)imide ($LiN(FSO_2)_2$), lithium bis(trifluoromethanesulfonyl)imide ($LiN(CF_3SO_2)_2$), lithium difluorophosphate ($LiPO_2F_2$), lithium difluoro(bis(oxalato))phosphate ($L_1PF_2(C_2O_4)_2$), lithium tetrafluoro(oxalato)phosphate ($LiPF_4(C_2O_4)$), lithium difluoro(oxalato)borate ($LiBF_2(C_2O_4)$) and lithium bis(oxalato)borate ($LiB(C_2O_4)_2$). It is preferable to make at least one of these solutes coexist with lithium hexafluorophosphate.

Furthermore, it is preferable that the above non-aqueous solvent is at least one non-aqueous solvent selected from the group consisting of cyclic carbonates, chainlike carbonates, cyclic esters, chainlike esters, cyclic ethers, chainlike ethers, sulfones or sulfoxide compounds and ionic liquids.

Furthermore, in a non-aqueous electrolyte battery having at least a cathode, an anode and an electrolyte for non-aqueous electrolyte battery, the present invention provides a non-aqueous electrolyte battery characterized in that the electrolyte for non-aqueous electrolyte battery is the above-mentioned electrolyte for non-aqueous electrolyte battery.

**Effect of the invention**

By the present invention, in a non-aqueous electrolyte for non-aqueous electrolyte battery including a non-aqueous solvent and a solute including lithium hexafluorophosphate, a particular siloxane compound is included. With this, when the electrolyte is used in a non-aqueous electrolyte battery, it is capable of demonstrating a superior cycle characteristic and a superior internal resistance characteristic. Besides, storage stability of the electrolyte product can be improved by suppressing reactivity of the siloxane compound with lithium hexafluorophosphate, as compared with electrolytes prepared by adding conventional siloxane compounds. Furthermore, it is possible to decrease a variation of a battery characteristic found in non-aqueous electrolyte batteries using electrolytes including conventional siloxane compounds.

**Detailed Description**

Hereinafter, although the present invention is explained in detail, the description of constituent elements mentioned below is an example of embodiments of the present invention. Therefore, it is not limited to these concrete contents. It can be implemented by transforming in various ways within its main point.

In a non-aqueous electrolyte for non-aqueous electrolyte battery including a non-aqueous solvent and a solute including lithium hexafluorophosphate, the non-aqueous electrolyte for non-aqueous electrolyte battery of the present invention is characterized by including at least one specific, below mentioned siloxane compound.

More specifically, in accordance with the present invention as the siloxane compound at least one of the following compounds No.1-No.15 is used.

Compound No.1

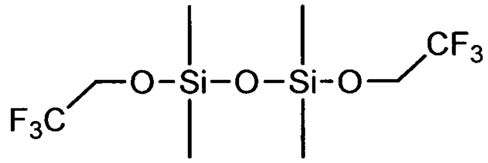

Compound No.2

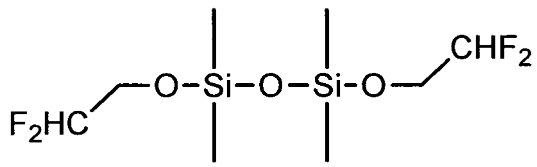

Compound No.3

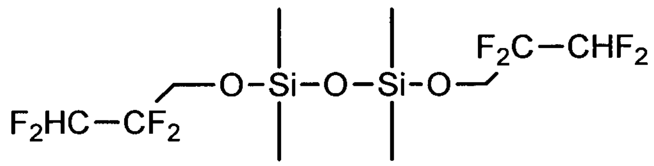

Compound No.4

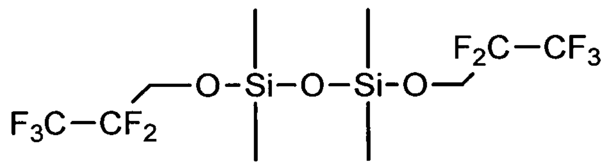

Compound No.5

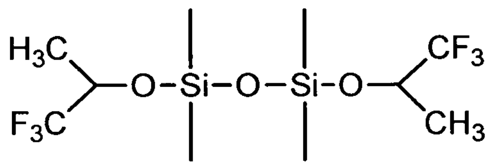

Compound No.6

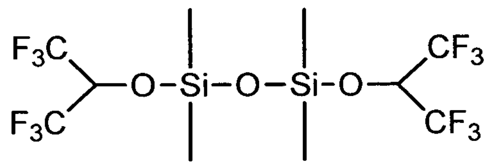

Compound No.7

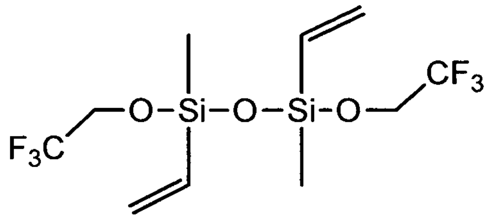

Compound No.8

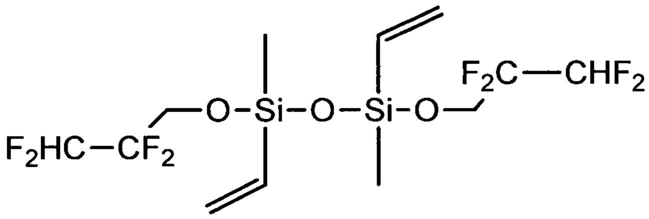

Compound No.9

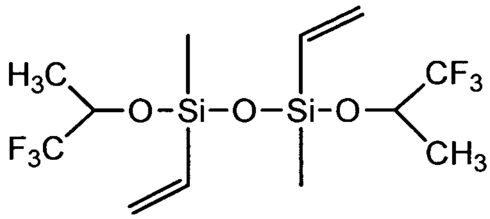

Compound No.10

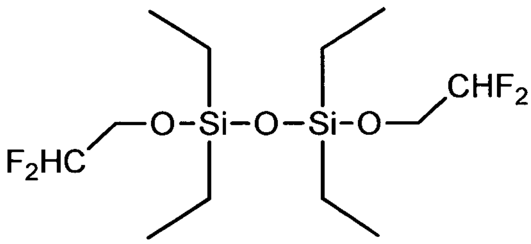

Compound No.11

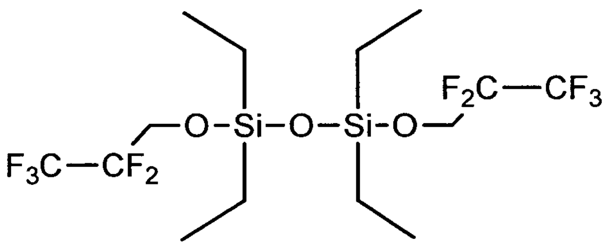

Compound No.12

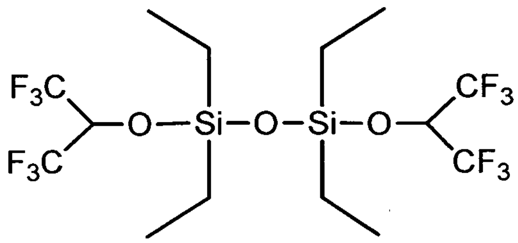

Compound No.13

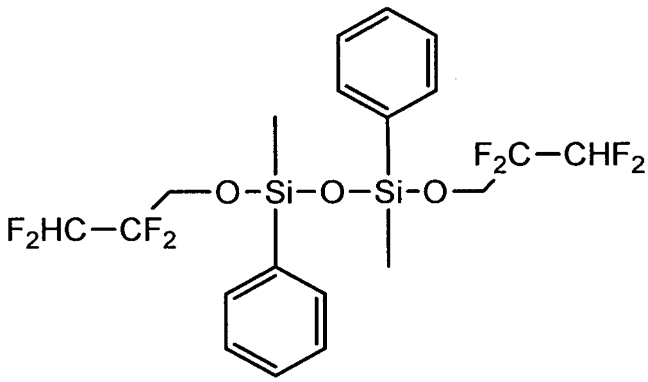

Compound No.14

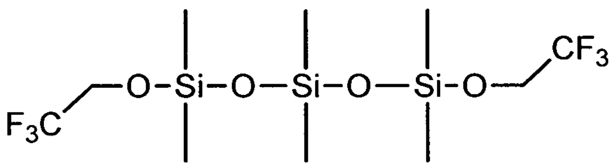

Compound No.15

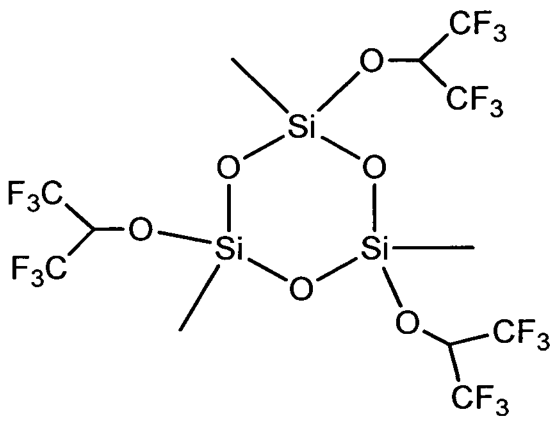

Although it is not clear about the action mechanism of improvement of battery characteristics by the present invention, it is considered that the siloxane compounds in the present invention form decomposition films at interfaces between a cathode and an electrolyte and between an anode and an electrolyte. The films suppress direct contacts between a non-aqueous solvent or a solute and an active material to prevent the non-aqueous solvent and the solute from being decomposed. With this, deterioration of battery characteristics is suppressed. This effect has been found in electrolytes using conventional siloxane compounds, too. However, the conventional siloxane compounds react with lithium hexafluorophosphate which is a solute during storage of the electrolyte. Therefore, the siloxane compounds

decompose to result in a loss of the battery characteristic improvement effect, and lithium hexafluorophosphate concentration also changes, thereby causing a problem that property of the electrolyte changes. The mechanism of improvement of storage stability of siloxane compounds in an electrolyte by the present invention is not clear. However, it is presumed that electrons on an oxygen atom inserted between silicon atoms dispersed by introducing an alkoxy group including a fluorine atom which becomes an electron-withdrawing group into the siloxane compound, and thereby reactivity with lithium hexafluorophosphate decreased greatly.

The addition amount of the siloxane compound used in the present invention is 0.01 mass% or greater, preferably 0.05 mass% or greater, more preferably 0.1 mass% or greater relative to the total amount of a non-aqueous electrolyte. Furthermore, its upper limit is 5.0 mass% or less, preferably 4.0 mass% or less, more preferably 3.0 mass% or less. In case that the above addition amount is less than 0.01 mass%, it is not preferable because the effect which improves cycle characteristic of a non-aqueous electrolyte battery using the non-aqueous electrolyte and which suppresses an increase of internal resistance is hard to obtain sufficiently. On the other hand, in case that the above addition amount is more than 5.0 mass%, it is not preferable because it is not only useless as not obtaining a further effect but also liable to cause deterioration of battery characteristic with the resistance increasing by an excessive film formation. In case of a range not to surpass 5.0 mass%, one kind may be used alone or two kinds or greater may be used after mixing at arbitrary combination and ratio to a use for these siloxane compounds.

The kinds of the non-aqueous solvent used in an electrolyte for non-aqueous electrolyte battery of the present invention is not particularly limited, and an arbitrary non-aqueous solvent can be used. As concrete illustrations, it is possible to cite cyclic carbonates such as propylene carbonate, ethylene carbonate, butylene carbonate, etc., chainlike carbonates such as diethyl carbonate, dimethyl carbonate, ethyl methyl carbonate, etc., cyclic esters such as γ-butyrolactone, γ- valerolactone, etc., chainlike esters such as methyl acetate, methyl propionate, etc., cyclic ethers such as tetrahydrofuran, 2-methyltetrahydrofuran, dioxane, etc., chainlike ethers such as dimethoxyethane, diethyl ether, etc., sulfones or sulfoxide compounds such as dimethyl sulfoxide, sulfolane, etc. Furthermore, although category is different from non-aqueous solvent, it is also possible to cite ionic liquids, etc. Furthermore, one kind may be used alone or two kinds or greater may be used after mixing at arbitrary combination and ratio to a use for non-aqueous solvent used in the present invention. Of these, from the viewpoint of electrochemical stability for the oxidation-reduction and chemical stability about heat and reactions with the above solutes, propylene carbonate, ethylene carbonate, diethyl carbonate, dimethyl carbonate and ethyl methyl carbonate are particularly preferable.

The kinds of other solutes which are made to coexist with lithium hexafluorophosphate used in the electrolyte for non-aqueous electrolyte battery of the present invention are not particularly limited, and it is possible to use a conventional well-known lithium salt. As concrete illustrations, it is possible to cite electrolyte lithium salts which are represented by $LiBF_4$, $LiClO_4$, $LiAsF_6$, $LiSbF_6$, $LiCF_3SO_3$, $LiN(CF_3SO_2)_2$, $LiN(FSO_2)_2$, $LiN(C_2F_5SO_2)_2$, $LiN(CF_3SO_2)(C_4F_9SO_2)$, $LiC(CF_3SO_2)_3$, $LiPF_3(C_3F_7)_3$, $LiB(CF_3)_4$, $LiBF_3(C_2F_5)$, $LiPO_2F_2$, $LiPF_4(C_2O_4)$, $LiPF_2(C_2O_4)_2$, $LiBF_2(C_2O_4)$, $LiB(C_2O_4)_2$, etc. For these solutes, one kind may be used alone or two kinds or greater may be used after mixing at arbitrary combination and ratio to a use. Among them, from the viewpoint of energy density, output characteristic, and life as a battery, $LiBF_4$, $LiN(CF_3SO_2)_2$, $LiN(FSO_2)_2$, $LiN(C_2F_5SO_2)_2$, $LiPO_2F_2$, $LiPF_4(C_2O_4)$, $LiPF_2(C_2O_4)_2$, $LiBF_2(C_2O_4)$ and $LiB(C_2O_4)_2$ are preferable.

Although there is no particular limitation about concentration of these solutes, its lower limit is a range of 0.5 mol/L or greater, preferably 0.7 mol/L or greater, more preferably 0.9 mol/L or greater. Furthermore, its upper limit is a range of 2.5 mol/L or less, preferably 2.0 mol/L or less, more preferably a range of 1.5 mol/L or less. In case that the concentration is less than 0.5 mol/L, cycle characteristic and output characteristic of the non-aqueous electrolyte battery tend to decrease by the decreases of ionic conductivity. On the other hand, in case that the concentration is more than 2.5 mol/L, there is also a tendency to make ionic conductivity decrease, and a risk to make cycle characteristic and output characteristic of non-aqueous electrolyte battery decrease by viscosity of the electrolyte for non-aqueous electrolyte battery increasing.

In case of dissolving a lot of solutes into the non-aqueous solvent at a time, temperature of the non-aqueous electrolyte may increase due to the heat of dissolution of the solute. When the solution temperature increases remarkably, there is a risk to generate hydrogen fluoride because decomposition of the fluorine-containing lithium salt is accelerated. Hydrogen fluoride is not preferable because of becoming a cause of deterioration of battery characteristic. Because of this, although the temperature of the non-aqueous electrolyte when dissolving the solute into the non-aqueous solvent is not particularly limited, it is preferable to be from -20 to 80 °C and more preferable to be from 0 to 60 °C.

Although the above is an explanation about the basic structure of a non-aqueous electrolyte for non-aqueous electrolyte battery of the present invention, unless the main point of the present invention is spoiled, an additive generally used may be added to a non-aqueous electrolyte for non-aqueous electrolyte battery of the present invention at an arbitrary ratio. As concrete illustrations, it is possible to cite compounds having an overcharge prevention effect, an anode film forming effect, and a cathode protection effect, such as cyclohexylbenzene, biphenyl, t-butylbenzene, vinylene carbonate, vinyl ethylene carbonate, difluoroanisole, fluoroethylene carbonate, propane sultone, dimethylvinylene carbonate, etc. Furthermore, like the case to be used in a non-aqueous electrolyte battery which is called lithium polymer

battery, it is also possible to use the electrolyte for non-aqueous electrolyte battery through coagulation by a gelling agent or a crosslinked polymer.

Next, structure of a non-aqueous electrolyte battery of the present invention is explained. The non-aqueous electrolyte battery of the present invention is characterized by using the above non-aqueous electrolyte for non-aqueous electrolyte battery of the present invention. For other constructional members, those used for general non-aqueous electrolyte batteries are used. That is to say, it consists of a cathode and an anode in which occlusion and release of lithium are possible, a collector, a separator, a case, etc.

The anode material is not particularly limited. It is possible to use lithium metal, alloys or intermetallic compounds of lithium and other metals and various carbon materials, artificial graphite, natural graphite, metal oxides, metal nitrides, tin (simple substance), tin compounds, silicon (simple substance), silicon compounds, activated carbons, electroconductive polymers, etc.

The cathode material is not particularly limited. In the case of lithium batteries and lithium ion batteries, it is possible to use, for example, lithium-containing transition metal composite oxides, such as $LiCoO_2$, $LiNiO_2$, $LiMnO_2$, and $LiMn_2O_4$, those in which a plurality of transition metals, such as Co, Mn and Ni, of those lithium-containing transition metal composite oxides have been mixed, those in which transition metals of those lithium-containing transition metal composite oxides have partially been replaced with other metals except transition metals, phosphate compounds of transition metals, called olivine, such as $LiFePO_4$, $LiCoPO_4$ and $LiMnPO_4$, oxides, such as $TiO_2$, $V_2O_5$ and $MoO_3$, sulfides, such as $TiS_2$ and FeS, or electroconductive polymers, such as polyacetylene, polyparaphenylene, polyaniline and polypyrrole, activated carbons, radical-generating polymers, carbon materials, etc.

It is possible to make an electrode sheet by adding a conductive material, such as acetylene black, ketjen black, carbon fiber or graphite, and a binding material, such as polytetrafluoroethylene, polyvinylidene fluoride or SBR resin, to the cathode or anode material and then forming into a sheet shape.

As a separator to prevent contact of an anode and a cathode, non-woven fabrics and porous sheets which are made from polypropylene, polyethylene, paper, glass fiber etc. are usable.

A non-aqueous electrolyte battery whose type is a coin type, a cylindrical type, a square type, an aluminium laminate sheet type, etc. is constructed from the above each element.

## Examples

Hereinafter, the present invention is explained concretely according to its examples. However, the present invention is not limited by the examples.

[Example 1-1]

In Table 1, preparation conditions of the non-aqueous electrolyte and evaluation results of storage stability of the electrolyte are shown. In Table 2, evaluation results of the battery using the electrolyte are shown. Also, each value of cycle characteristic and internal resistance characteristic of the battery in Table 2 is a relative value provided that each evaluation result of the initial electrical capacity and internal resistance of a laminate cell produced using electrolytes No. 1-37 before standing still for one month after preparation is taken as 100.

A non-aqueous electrolyte for non-aqueous electrolyte battery was prepared using a mixed solvent of ethylene carbonate and ethyl methyl carbonate having a volume ratio of 1:2 as a non-aqueous solvent, and dissolving $LiPF_6$ by 1.0 mol/L as a solute and the above siloxane compound No.1 by 0.01 mass% as an additive into the solvent. Also, the above preparation was done while maintaining temperature of the electrolyte within a range of 20 to 30 °C.

[Storage stability evaluation of electrolyte]

After the prepared electrolyte was made to stand still for one month under argon atmosphere at 25 °C, the residual amount of the above siloxane compound No.1 in the electrolyte was measured. $^{1}H$ NMR method and $^{19}F$ NMR method were used for the measurement of the residual amount.

[Electrochemical characteristic evaluation of electrolyte]

A cell which included $LiNi_{1/3}Mn_{1/3}Co_{1/3}O_2$ as the cathode material and graphite as the anode material was made using an electrolyte before standing still for one-month after preparation and an electrolyte after standing still for one-month after preparation, and actually the cycle characteristic and the internal resistance of the battery were evaluated. The cell for testing was made as follows.

Polyvinylidene fluoride (PVDF) of 5 mass% as a binder and acetylene black of 5 mass% as a conducting agent were mixed to $LiNi_{1/3}Mn_{1/3}Co_{1/3}O_2$ powder of 90 mass%, followed by adding N-methylpyrrolidone to make a paste. A

cathode body for testing was made through applying this paste on an aluminium foil and drying it. Furthermore, polyvinylidene fluoride (PVDF) of 10 mass% as a binder was mixed to graphite powder of 90 mass%, followed by adding N-methylpyrrolidone to make a slurry. An anode body for testing was made through applying this slurry on a copper foil and drying it for 12 hours at 120 °C. Then, a separator made of polyethylene was impregnated with the electrolyte, and then a 50 mAh cell with an aluminium laminate outer package was constructed.

[High temperature cycle characteristic]

Using the above cell, a charge-discharge test in an environmental temperature of 60 °C was implemented to evaluate its cycle characteristic. Both the charging and the discharging were implemented at a current density of 0.35 $mA/cm^2$, and there was repeated a charge-discharge cycle in which the charge was conducted by maintaining 4.3 V for one hour after reaching 4.3 V and in which the discharge was conducted until 3.0 V. Then, the condition of degradation of the cell was evaluated by discharge-capacity maintenance rate after 500 cycles (cycle characteristic evaluation). The discharge-capacity maintenance rate was determined by the following formula.

< Discharge-capacity maintenance rate after 500 cycles>

$$\text{Discharge-capacity maintenance rate (\%)} = (\text{Discharge capacity after 500 cycles / initial discharge-capacity}) \times 100$$

[Internal resistance characteristic (25 °C)]

The cell after the cycle test was charged to 4.2 V at a current density of 0.35 $mA/cm^2$ at an environmental temperature of 25 °C. Then, internal resistance of the battery was measured.

[Table1]

| | Electrolyte No | Siloxane compound | | Other electrolytes except $LiPF_6$ | | Residual amount of siloxane compound after standing still for one month(%) |
|---|---|---|---|---|---|---|
| | | Compound No. | Concentration (mass%) | Name | Concentration (mass%) | |
| Example 1-1 | 1 -1 | No.1 | 001 | None | 0 | 97 |
| Example 1-2 | 1-2 | No.1 | 0.05 | | 0 | 96 |
| Example 1-3 | 1-3 | No.1 | 0.1 | | 0 | 97 |
| Example 1-4 | 1-4 | No.1 | 1 | | 0 | 98 |
| Example 1-5 | 1-5 | No.2 | 1 | | 0 | 93 |
| Example 1-6 | 1-6 | No.3 | 1 | | 0 | 96 |
| Example 1-7 | 1-7 | No.4 | 1 | | 0 | 97 |
| Example 1-8 | 1-8 | No.5 | 1 | | 0 | 92 |
| Example 1-9 | 1-9 | No.6 | 0.5 | | 0 | 99 |
| Example 1-10 | 1-10 | No.6 | 1 | | 0 | 98 |
| Example 1-11 | 1-11 | No.6 | 2 | | 0 | 99 |
| Example 1-12 | 1-12 | No.7 | 1 | | 0 | 97 |
| Example 1-13 | 1-13 | No.7 | 3 | | 0 | 96 |
| Example 1-14 | 1-14 | No.7 | 5 | | 0 | 96 |
| Example 1-15 | 1-15 | No.8 | 1 | | 0 | 97 |
| Example 1-16 | 1-16 | No.9 | 1 | | 0 | 94 |
| Example 1-17 | 1-17 | No.10 | 1 | | 0 | 95 |

(continued)

| | Electrolyte No | Siloxane compound | | Other electrolytes except $LiPF_6$ | | Residual amount of siloxane compound after standing still for one month(%) |
|---|---|---|---|---|---|---|
| | | Compound No. | Concentration (mass%) | Name | Concentration (mass%) | |
| Example 1-18 | 1-18 | No.11 | 1 | | 0 | 96 |
| Example 1-19 | 1-19 | No.12 | 0.5 | | 0 | 98 |
| Example 1 -20 | 1-20 | No.12 | 1 | | 0 | 98 |
| Example 1 -21 | 1-21 | No.13 | 1 | | 0 | 93 |
| Example 1 -22 | 1-22 | No.14 | 0.5 | | 0 | 91 |
| Example 1 -23 | 1-23 | No.14 | 1 | | 0 | 91 |
| Example 1 -24 | 1-24 | No.15 | 0.5 | | 0 | 97 |
| Example 1 -25 | 1-25 | No.15 | 1 | | 0 | 97 |
| Example 1 -26 | 1-26 | No.1 | 1 | Lithium difluorooxalatoborate | 1 | 96 |
| Example 1 -27 | 1-27 | No.1 | 1 | Lithium bis(oxalato)borate | 1 | 97 |
| Example 1 -28 | 1-28 | No.1 | 1 | Lithium difluorobis(oxalato)phosphate | 1 | 97 |
| Example 1 -29 | 1-29 | No.1 | 1 | Lithium tetrafluorooxalatophosphate | 1 | 98 |
| Example 1-30 | 1-30 | No.1 | 1 | Lithium difluorophosphate | 1 | 97 |
| Example 1-31 | 1-31 | No.2 | 1 | Lithium difluorooxalatoborate | 1 | 93 |

(continued)

| | Electrolyte No | Siloxane compound | | Other electrolytes except $LiPF_6$ | | Residual amount of siloxane compound after standing still for one month(%) |
|---|---|---|---|---|---|---|
| | | Compound No. | Concentration (mass%) | Name | Concentration (mass%) | |
| Example 1 -32 | 1-32 | No.3 | 1 | Lithium bis(oxalato)borate | 1 | 94 |
| Example 1 -33 | 1-33 | No.4 | 1 | Lithium difluorobis(oxalato)phosphate | 1 | 96 |
| Example 1-34 | 1-34 | No.5 | 1 | Lithium tetrafluoro(oxalato)phosphate | 1 | 97 |
| Example 1 -35 | 1-35 | No.6 | 1 | Lithium difluorophosphate | 1 | 92 |
| Example 1 -36 | 1-36 | No.7 | 1 | Lithium difluorobis(oxalato)phosphate | 1 | 99 |
| Comparative Example 1-1 | 1-37 | None | 0 | None | 0 | - |
| Comparative Example 1-2 | 1-38 | None | 0 | Lithium difluorobis(oxalato)phosphate | 1 | - |
| Comparative Example 1-3 | 1-39 | No.16 | 0.5 | None | 0 | 52 |
| Comparative Example 1-4 | 1-40 | No.16 | 1 | None | 0 | 46 |
| Comparative Example 1-5 | 1-41 | No.17 | 0.5 | None | 0 | 32 |
| Comparative Example 1-6 | 1-42 | No.18 | 1 | None | 0 | 19 |

[Examples 1-2 - 1-36]

In Table 1, preparation conditions of the non-aqueous electrolytes and evaluation results of storage stability of the electrolytes are shown. In Table 2, evaluation results of batteries using the electrolytes are shown.

In the above Example 1-1, the kinds and the addition amounts of the siloxane compound and other electrolyte except lithium hexafluorophosphate (hereinafter, may be merely described as "other electrolyte") were respectively changed, thereby preparing electrolytes for non-aqueous electrolyte batteries. Cells were made using the non-aqueous electrolytes as well as Example 1-1, and the battery evaluation was conducted.

[Comparative Examples 1-1 - 1-6]

In Table 1, preparation conditions of the non-aqueous electrolytes and evaluation results of storage stability of the electrolytes are shown. In Table 2, evaluation results of batteries using the electrolytes are shown.

The electrolyte of Comparative Example 1-1 was prepared in the same manner as that of Example 1-1, except in that neither the siloxane compound nor other electrolyte was added. The electrolyte of Comparative Example 1-2 was prepared as well as above Example 1-1 except for not adding a siloxane compound and dissolving 1 mass% of lithium difluorobis(oxalato)phosphate which is other electrolyte. The electrolyte of Comparative Example 1-3 - 1-6 was prepared as well as Example 1-1 except for adding 0.5 mass% or 1.0 mass% of the following siloxane compound No.16, No.17 or No.18 and not adding other electrolyte.

Compound No.16

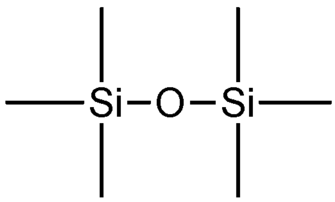

Compound No.17

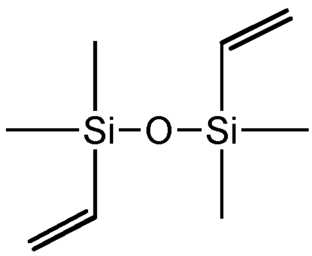

Compound No.18

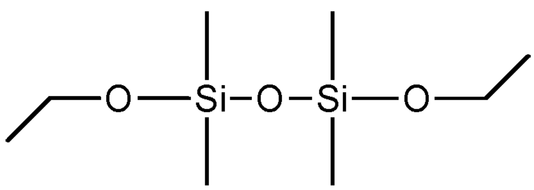

Comparing the above results, in case that the siloxane compounds include fluorine, residual amounts of the siloxane compound after standing still for one month indicated 90 % or greater, and a high storage stability in an electrolyte was shown as compared with siloxane compounds not including fluorine. In evaluation result of battery using an electrolyte before standing still for one-month after preparation, siloxane compounds including fluorine indicated superior cycle characteristic and internal resistance that are equal to or greater than those of conventional siloxane compounds not including fluorine. Furthermore, comparing a battery characteristic using an electrolyte before standing still for one-month after preparation with that using an electrolyte after standing still for one-month after preparation, although a battery

characteristic changed widely in case of using siloxane compounds not including fluorine, a difference was not seen mostly in case of using siloxane compounds including fluorine. Also with this, a high storage stability in an electrolyte using the siloxane compound including fluorine was indicated. Furthermore, also in case of using the siloxane compound together with other electrolytes, a high storage stability in the electrolyte using the siloxane compound including fluorine was confirmed. Regarding the battery characteristic, superior cycle characteristic and internal resistance which are equal to or greater than those of conventional siloxane compounds not including fluorine were shown. Therefore, it was shown to be able to obtain a non-aqueous electrolyte battery that is stable and superior in cycle characteristic and internal resistance characteristic even after standing still for one month after the preparation by using the electrolyte for non-aqueous electrolyte battery of the present invention.

[Examples 2-1 - 2-8, Comparative Examples 2-1 - 2-4]

In Table 3, evaluation results of batteries prepared by changing the anode body used in Example 1-1 are shown. Also, in a combination of respective electrodes in Table 3, each value of cycle characteristic and internal resistance characteristic of batteries is a relative value provided that each evaluation result of the initial electrical capacity and internal resistance of a laminate cell produced using the electrolyte No. 1-37 before standing still for one month after preparation is taken as 100. Using the non-aqueous electrolyte No. 1-4, 1-10, 1-12, 1-20, 1-37 or 1-40 as the non-aqueous electrolyte for non-aqueous electrolyte battery, cycle characteristic and internal resistance were evaluated as well as Example 1-1. Also, in Examples 2-1 - 2-4, and Comparative Examples 2-1 - 2-2, whose anode active material is $Li_4Ti_5O_{12}$, its anode body was made through mixing polyvinylidene fluoride (PVDF) of 5 mass% as a binder and acetylene black of 5 mass% as a conducting agent into $Li_4Ti_5O_{12}$ powder of 90 mass%, followed by adding N-methylpyrrolidone and applying the obtained paste on a copper foil and drying it. Its end-of-charging voltage was set at 2.7 V and end-of-discharging voltage was set at 1.5 V in battery evaluation. Furthermore, in Example 2-5 - 2-8, and Comparative Example 2-3 - 2-4, whose anode active material is graphite (including silicon), its anode body was made through mixing silicon powder of 10 mass% and polyvinylidene fluoride (PVDF) of 10 mass % as a binder into graphite powder of 80 mass%, followed by adding N-methylpyrrolidone and applying the obtained paste on a copper foil and drying it. Its end-of-charging voltage and end-of-discharging voltage in battery evaluation were set similar to Example 1-1.

[Table2]

| | Electrolyte No. | Cathode Active Material | Anode Active Maternal | Electrolyte before 1 month standing still after preparation | | Electrolyte after 1 month standing still after preparation | |
|---|---|---|---|---|---|---|---|
| | | | | Capacity maintenance rate after 500 cycles (%) | Internal resistance | Capacity maintenance rate after 500 cycles (%) | Internal resistance |
| Example 1-1 | 1-1 | | | 55 | 98 | 54 | 98 |
| Example 1-2 | 1-2 | | | 57 | 97 | 55 | 98 |
| Example 1-3 | 1-3 | | | 61 | 95 | 60 | 96 |
| Example 1-4 | 1-4 | | | 68 | 92 | 66 | 92 |
| Example 1-5 | 1-5 | | | 68 | 92 | 65 | 93 |
| Example 1-6 | 1-6 | | | 67 | 93 | 65 | 93 |
| Example 1-7 | 1-7 | | | 68 | 92 | 66 | 93 |
| Example 1-8 | 1-8 | | | 69 | 91 | 66 | 92 |
| Example 1-9 | 1-9 | | | 65 | 96 | 63 | 96 |
| Example 1-10 | 1-10 | | | 68 | 91 | 66 | 92 |
| Example 1-11 | 1-11 | | | 67 | 93 | 65 | 94 |
| Example 1-12 | 1-12 | | | 67 | 93 | 66 | 93 |
| Example 1-13 | 1-13 | | | 64 | 97 | 62 | 98 |
| Example 1-14 | 1-14 | | | 62 | 99 | 60 | 99 |
| Example 1-15 | 1-15 | | | 67 | 90 | 63 | 92 |
| Example 1-16 | 1-16 | | | 69 | 92 | 65 | 93 |
| Example 1-17 | 1-17 | | | 68 | 91 | 65 | 93 |

(continued)

| | Electrolyte No. | Cathode Active Material | Anode Active Maternal | Electrolyte before 1 month standing still after preparation | | Electrolyte after 1 month standing still after preparation | |
|---|---|---|---|---|---|---|---|
| | | | | Capacity maintenance rate after 500 cycles (%) | Internal resistance | Capacity maintenance rate after 500 cycles (%) | Internal resistance |
| Example 1-18 | 1-18 | $LiNi_1/3Co_1/3Mn1/3O_2$ | Graphite | 68 | 91 | 64 | 93 |
| Example 1-19 | 1-19 | | | 63 | 95 | 61 | 97 |
| Example 1-20 | 1-20 | | | 67 | 92 | 63 | 92 |
| Example 1-21 | 1-21 | | | 67 | 92 | 64 | 93 |
| Example 1-22 | 1-22 | | | 63 | 97 | 61 | 97 |
| Example 1-23 | 1-23 | | | 69 | 93 | 67 | 95 |
| Example 1-24 | 1-24 | | | 62 | 97 | 59 | 98 |
| Example 1-25 | 1-25 | | | 67 | 92 | 65 | 94 |
| Example 1-26 | 1-26 | | | 84 | 71 | 84 | 72 |
| Example 1-27 | 1-27 | | | 82 | 70 | 81 | 70 |
| Example 1-28 | 1-28 | | | 86 | 70 | 85 | 71 |
| Example 1-29 | 1-29 | | | 83 | 72 | 81 | 73 |
| Example 1-30 | 1-30 | | | 80 | 70 | 79 | 71 |

(continued)

| | Electrolyte No. | Cathode Active Material | Anode Active Maternal | Electrolyte before 1 month standing still after preparation | | Electrolyte after 1 month standing still after preparation | |
|---|---|---|---|---|---|---|---|
| | | | | Capacity maintenance rate after 500 cycles (%) | Internal resistance | Capacity maintenance rate after 500 cycles (%) | Internal resistance |
| Example 1-31 | 1-31 | | | 84 | 69 | 84 | 70 |
| Example 1-32 | 1-32 | | | 83 | 71 | 82 | 71 |
| Example 1-33 | 1-33 | | | 87 | 71 | 86 | 72 |
| Example 1-34 | 1-34 | | | 83 | 70 | 83 | 70 |
| Example 1-35 | 1-35 | | | 81 | 72 | 80 | 73 |
| Example 1-36 | 1-36 | | | 86 | 71 | 85 | 72 |
| Comparative Example 1-1 | 1-37 | | | 54 | 100 | 50 | 104 |
| Comparative Example 1-2 | 1-38 | | | 78 | 73 | 75 | 77 |
| Comparative Example 1-3 | 1-39 | | | 63 | 95 | 52 | 108 |
| Comparative Example 1-4 | 1-40 | | | 66 | 93 | 53 | 112 |
| Comparative Example 1-5 | 1-41 | | | 64 | 96 | 49 | 115 |
| Comparative Example 1-6 | 1-42 | | | 68 | 95 | 47 | 118 |

[Table 3]

| | Electrolyte No. | Cathode Active Material | Anode Active Material | Electrolyte before 1 month standing still after preparation | | Electrolyte after 1 month standing still after preparation | |
|---|---|---|---|---|---|---|---|
| | | | | Capacity maintenance rate after 500 cycles (%) | Internal resistance | Capacity maintenance rate after 500 cycles (%) | Internal resistance |
| Example 2-1 | 1-4 | LiNi1 /3Co1/3Mn1 /3O2 | Li4Ti5O12 | 69 | 92 | 66 | 93 |
| Example 2-2 | 1-10 | | | 70 | 91 | 67 | 92 |
| Example 2-3 | 1-12 | | | 68 | 93 | 67 | 93 |
| Example 2-4 | 1-20 | | | 68 | 92 | 65 | 93 |
| Comparative Example 2-1 | 1-37 | | | 56 | 100 | 53 | 103 |
| Comparative Example 2-2 | 1-40 | | | 67 | 93 | 52 | 114 |
| Example 2-5 | 1-4 | | Graphite (including silicon) | 63 | 93 | 61 | 93 |
| Example 2-6 | 1-10 | | | 64 | 93 | 61 | 95 |
| Example 2-7 | 1-12 | | | 62 | 92 | 60 | 93 |
| Example 2-8 | 1-20 | | | 64 | 93 | 60 | 93 |
| Comparative Example 2-3 | 1-37 | | | 48 | 100 | 45 | 107 |
| Comparative Example 2-4 | 1-40 | | | 64 | 94 | 43 | 113 |
| Example 3-1 | 1-4 | LiCoO2 | Graphite | 68 | 92 | 65 | 92 |
| Example 3-2 | 1-10 | | | 68 | 91 | 66 | 93 |
| Example 3-3 | 1-12 | | | 67 | 92 | 65 | 93 |
| Example 3-4 | 1-20 | | | 67 | 92 | 64 | 92 |
| Comparative Example 3-1 | 1-37 | | | 54 | 100 | 51 | 104 |
| Comparative Example 3-2 | 1-40 | | | 65 | 92 | 50 | 115 |

(continued)

| | Electrolyte No. | Cathode Active Material | Anode Active Material | Electrolyte before 1 month standing still after preparation | | Electrolyte after 1 month standing still after preparation | |
|---|---|---|---|---|---|---|---|
| | | | | Capacity maintenance rate after 500 cycles (%) | Internal resistance | Capacity maintenance rate after 500 cycles (%) | Internal resistance |
| Example 4-1 | 1-4 | LiMn1 .95Al0.05O4 | Graphite | 65 | 93 | 63 | 94 |
| Example 4-2 | 1-10 | | | 66 | 92 | 63 | 93 |
| Example 4-3 | 1-2 | | | 64 | 92 | 62 | 94 |
| Example 4-4 | 1-20 | | | 65 | 92 | 63 | 93 |
| Comparative Example 4-1 | 1 -37 | | | 52 | 100 | 49 | 105 |
| Comparative Example 4-2 | 1-40 | | | 64 | 94 | 47 | 116 |
| Example 5-1 | 1-4 | LiFePO4 | Graphite | 71 | 94 | 70 | 95 |
| Example 5-2 | 1-10 | | | 70 | 93 | 68 | 93 |
| Example 5-3 | 1-12 | | | 71 | 93 | 69 | 95 |
| Example 5-4 | 1-20 | | | 71 | 94 | 68 | 95 |
| Comparative Example 5-1 | 1-37 | | | 60 | 100 | 58 | 103 |
| Comparative Example 5-2 | 1-40 | | | 70 | 94 | 54 | 110 |

[Examples 3-1 - 3-4, Comparative Examples 3-1 - 3-2]

In Table 3, evaluation results of batteries prepared changing the cathode body used in Example 1-1 are shown. Using the non-aqueous electrolyte No. 1-4, 1-10, 1-12, 1-20, 1-37 or 1-40 as a non-aqueous electrolyte for non-aqueous electrolyte battery, cycle characteristic and internal resistance were evaluated as well as Example1-1. A cathode body whose cathode active material is $LiCoO_2$ was made through mixing polyvinylidene fluoride (PVDF) of 5 mass% as a binder and acetylene black of 5 mass% as a conducting agent into $LiCoO_2$ powder of 90 mass%, followed by adding N-methylpyrrolidone and applying the obtained paste on an aluminium foil and drying it. Its end-of-charging voltage was set at 4.2 V and end-of-discharging voltage was set at 3.0 V in battery evaluation.

[Examples 4-1 - 4-4, Comparative Examples 4-1 - 4-2]

In Table 3, evaluation results of batteries prepared by changing the cathode body used in Example 1-1 are shown. Using the non-aqueous electrolyte No. 1-4, 1-10, 1-12, 1-20, 1-37 or 1-40 as a non-aqueous electrolyte for non-aqueous electrolyte battery, cycle characteristic and internal resistance were evaluated as well as Example 1-1. A cathode body whose cathode active material is $LiMn_{1.95}Al_{0.05}O_4$ was made through mixing polyvinylidene fluoride (PVDF) of 5 mass% as a binder and acetylene black of 5 mass% as a conducting agent into $LiMn_{1.95}Al_{0.05}O_4$ powder of 90 mass%, followed by adding N-methylpyrrolidone and applying the obtained paste on an aluminium foil and drying it. Its end-of-charging voltage was set at 4.2 V and end-of-discharging voltage was set at 3.0 V in battery evaluation.

[Examples 5-1-5-4, Comparative Examples 5-1-5-2]

In Table 3, evaluation results of batteries prepared by changing the cathode body used in Example 1-1 are shown. Using the non-aqueous electrolyte No. 1-4, 1-10, 1-12, 1-20, 1-37 or 1-40 as a non-aqueous electrolyte for non-aqueous electrolyte battery, cycle characteristic and internal resistance were evaluated as well as Example 1-1. A cathode body whose cathode active material is $LiFePO_4$ was made through mixing polyvinylidene fluoride (PVDF) of 5 mass% as a binder and acetylene black of 5 mass% as a conducting agent into $LiFePO_4$ powder of 90 mass% which was covered with amorphous carbon, followed by adding N-methylpyrrolidone and applying the obtained paste on an aluminium foil and drying it. Its end-of-charging voltage was set at 4.1 V and end-of-discharging voltage was set at 2.5 V in battery evaluation.

As described above, in each Example using $LiCoO_2$, $LiMn_{1.95}Al_{0.05}O_4$ or $LiFePO_4$ as a cathode active material, it was confirmed that cycle characteristic and internal resistance of a laminate cell using the electrolyte for non-aqueous electrolyte battery of the present invention is superior to the corresponding Comparative Example. Therefore, using the electrolyte for non-aqueous electrolyte battery of the present invention, it was shown that regardless of kinds of the cathode active material, even in case of using an electrolyte after standing still for one-month after preparation, it is possible to obtain a non-aqueous electrolyte battery that is stable and has superior cycle characteristic and internal resistance characteristic like the case of using an electrolyte before standing still for one-month after preparation.

Furthermore, as described above, even in each Example using $Li_4Ti_5O_{12}$ or graphite (including silicon) as an anode active material, it was confirmed that cycle characteristic and internal resistance of a laminate cell using the electrolyte for non-aqueous electrolyte battery of the present invention is superior to the corresponding Comparative Example. Therefore, using the electrolyte for non-aqueous electrolyte battery of the present invention, it was shown that regardless of kinds of the anode active material, even in case of using an electrolyte after standing still for one-month after preparation, it is possible to obtain a non-aqueous electrolyte battery that is stable and has superior cycle characteristic and internal resistance characteristic like the case of using an electrolyte before standing still for one-month after preparation.

## Claims

1. A non-aqueous electrolyte for non-aqueous electrolyte battery containing a non-aqueous solvent and a solute, the non-aqueous electrolyte for non-aqueous electrolyte battery containing at least lithium hexafluorophosphate as the solute, the electrolyte for non-aqueous electrolyte battery containing at least one siloxane compound, **characterized in that** the at least one siloxane compound is one with one of the following chemical formulae:

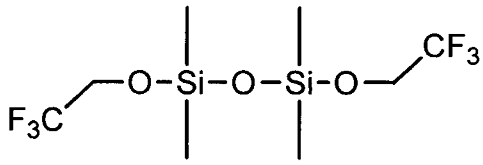

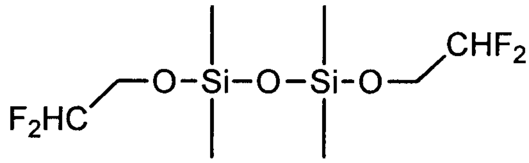

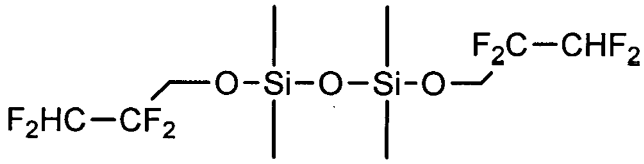

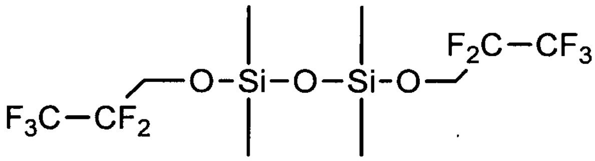

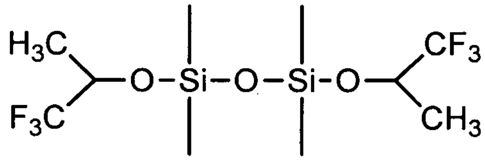

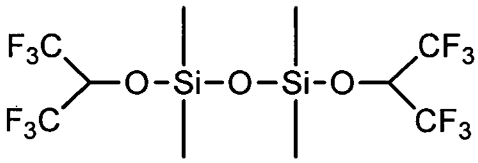

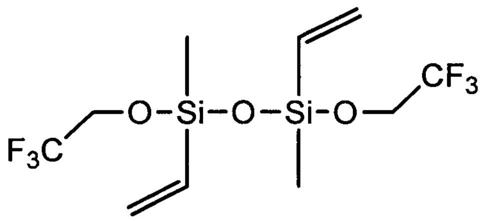

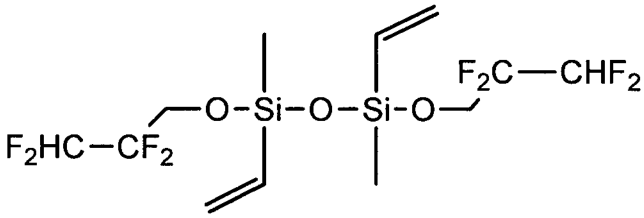

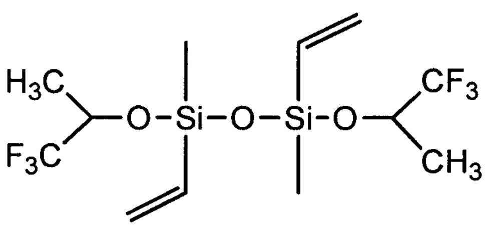

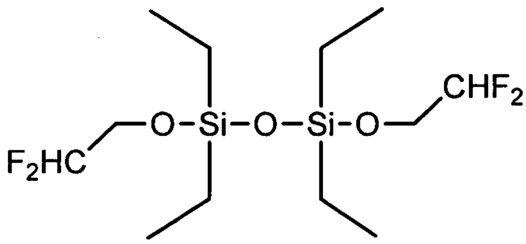

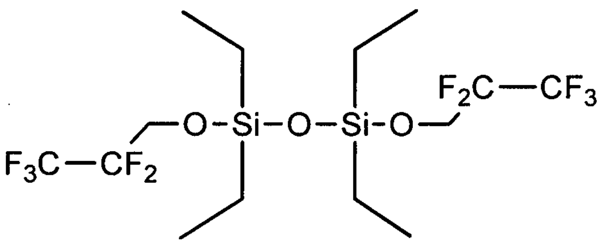

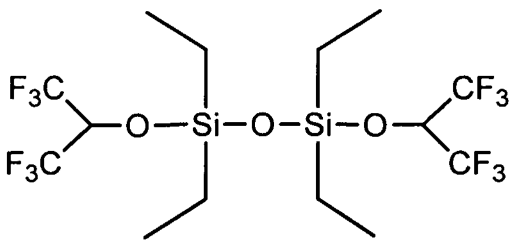

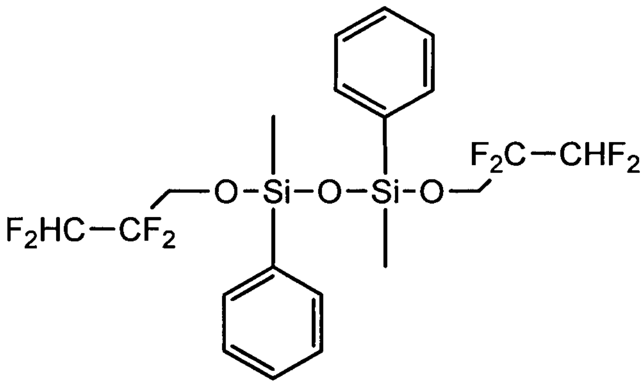

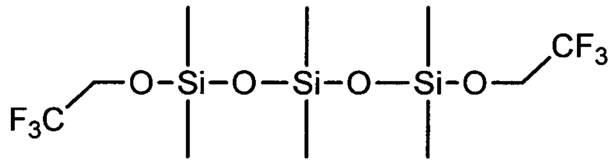

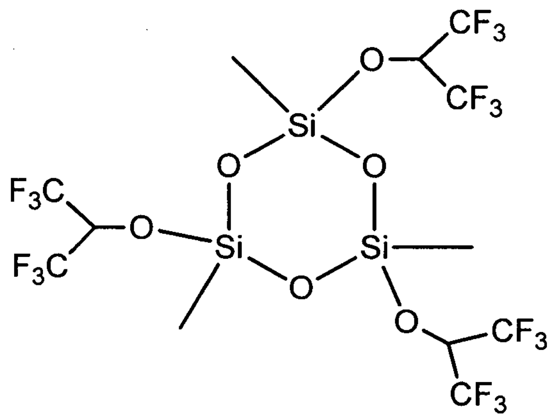

2. The electrolyte for non-aqueous electrolyte battery as claimed in claim 1, wherein as the solute at least one solute selected from the group consisting of lithium tetrafluoroborate ($LiBF_4$), lithium bis(fluorosulfonyl)imide ($LiN(FSO_2)_2$), lithium bis(trifluoromethanesulfonyl)imide ($LiN(CF_3SO_2)_2$), lithium difluorophosphate ($LiPO_2F_2$), lithium difluoro(bis(oxalato))phosphate ($L_1PF_2(C_2O_4)_2$), lithium tetrafluoro(oxalato)phosphate ($LiPF_4(C_2O_4)$), lithium difluoro(oxalato)borate ($LiBF_2(C_2O_4)$) and lithium bis(oxalato)borate ($LiB(C_2O_4)_2$) is made to coexist with lithium hexafluorophosphate.

3. The electrolyte for non-aqueous electrolyte battery as claimed in claim 1 or claim 2, wherein concentration of the solute is in a range of 0.5 mol/L - 2.5 mol/L.

4. The electrolyte for non-aqueous electrolyte battery as claimed in any of claim 1 to claim 3, wherein the non-aqueous solvent is at least one selected from the group consisting of cyclic carbonates, chainlike carbonates, cyclic esters, chainlike esters, cyclic ethers, chainlike ethers, sulfones or sulfoxide compounds and ionic liquids.

5. The electrolyte for non-aqueous electrolyte battery as claimed in any of claim 1 to claim 4, wherein the non-aqueous solvent is at least one selected from the group consisting of propylene carbonate, ethylene carbonate, diethyl carbonate, dimethyl carbonate and ethyl methyl carbonate.

6. The electrolyte for non-aqueous electrolyte battery as claimed in any of claim 1 to claim 5, wherein the addition amount of the siloxane compound is in a range of 0.01-5.0 mass% to total amount of the electrolyte for non-aqueous electrolyte battery.

7. A non-aqueous electrolyte battery equipped with at least a cathode, an anode and an electrolyte for non-aqueous electrolyte battery, the non-aqueous electrolyte battery being **characterized by** that the electrolyte for non-aqueous electrolyte battery is the electrolyte for non-aqueous electrolyte battery according to any of claim 1 to claim 6.

**Patentansprüche**

1. Nicht wässriger Elektrolyt für eine Batterie mit nicht wässrigem Elektrolyten, enthaltend ein nicht wässriges Lösungsmittel und einen gelösten Stoff, wobei der nicht wässrige Elektrolyt für die Batterie mit nicht wässrigem Elektrolyten zumindest Lithiumhexafluorphosphat als den gelösten Stoff enthält, wobei der Elektrolyt für die Batterie mit nicht wässrigem Elektrolyten zumindest eine Siloxanverbindung enthält,
**dadurch gekennzeichnet, dass** die zumindest eine Siloxanverbindung eine mit den folgenden chemischen Formeln ist:

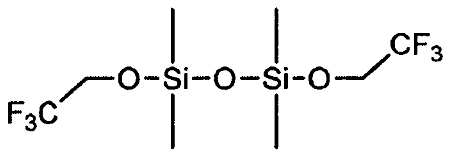
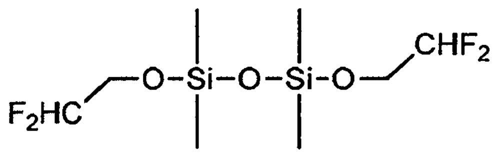

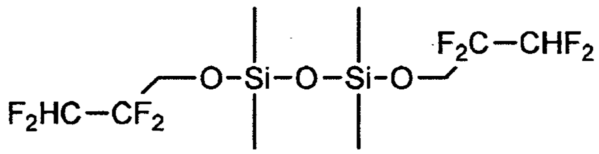

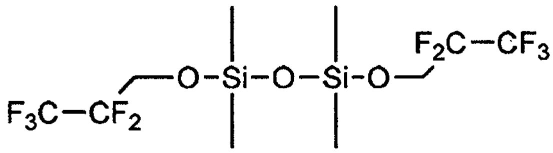
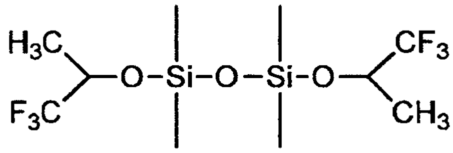

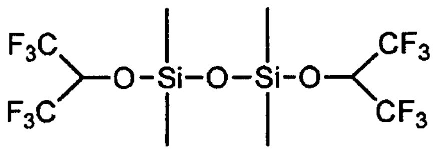
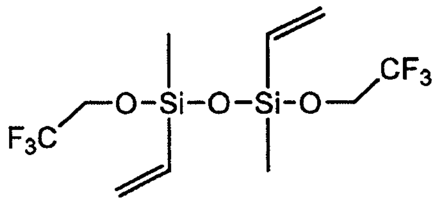

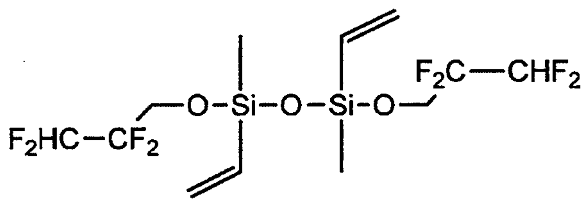

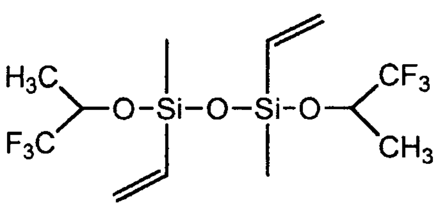
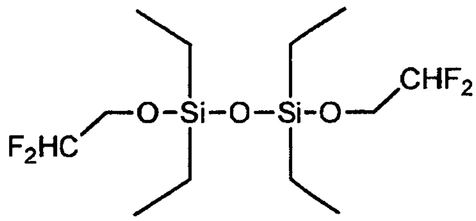

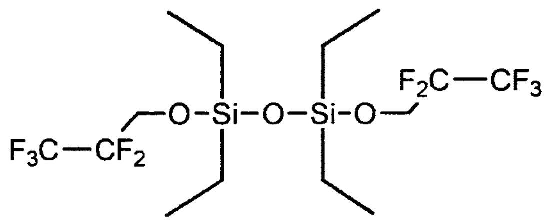

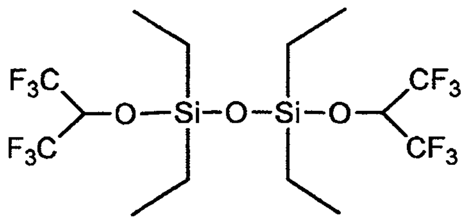

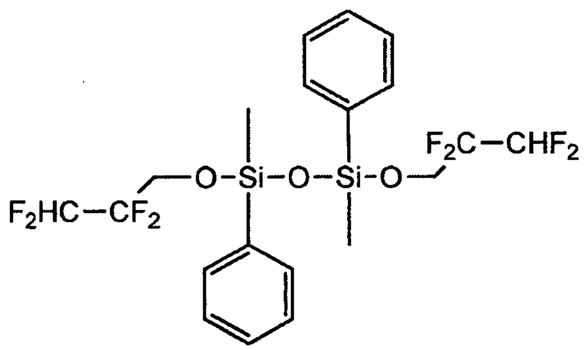

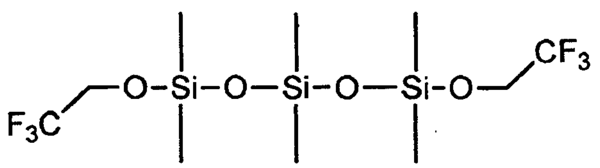

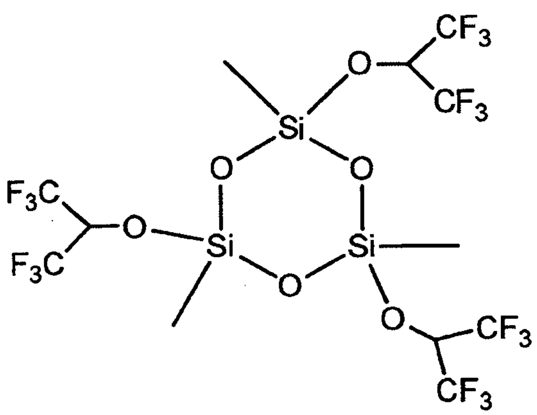

.

2. Elektrolyt für eine Batterie mit nicht wässrigem Elektrolyten nach Anspruch 1, wobei der gelöste Stoff zumindest ein gelöster Stoff ist, ausgewählt aus der Gruppe, bestehend aus Lithiumtetrafluorborat ($LiBF_4$), Lithiumbis(fluorsulfonyl)imid ($LiN(FSO_2)_2$), Lithiumbis(trifluormethansulfonyl)imid ($LiN(CF_3SO_2)_2$), Lithiumdifluorphospaht ($LiPO_2F_2$), Lithiumdifluor(bis(oxala-to))phosophat ($LiPF_2(C_2O_4)_2$), Lithiumtetrafluor(oxalato)phosphat ($LiPF_4(C_2O_4)$), Lithiumdifluor(oxalato)borat ($LiBF_2(C_2O_4)$) und Lithium-bis-(oxalato)borat ($LiB(C_2O_4)_2$) zur Coexistenz mit Lithiumhexafluorid gebracht wird.

3. Elektrolyt für eine Batterie mit nicht wässrigem Elektrolyten nach Anspruch 1 oder Anspruch 2, wobei die Konzentration des gelösten Stoffes in einem Bereich von 0,5 Mol/L - 2,5 Mol/L liegt.

4. Elektrolyt für eine Batterie mit nicht wässrigem Elektrolyten nach einem der Ansprüche 1 bis 3, wobei das nicht wässrige Lösungsmittel zumindest eines ist, ausgewählt aus der Gruppe, bestehend aus zyklischen Carbonaten, kettenartigen Carbonaten, zyklischen Estern, kettenartigen Estern, zyklischen Ethern, kettenartigen Ethern, Sulfonen oder Sulfoxidverbindungn und ionischen Flüssigkeiten.

5. Elektrolyt für eine Batterie mit nicht wässrigem Elektroyten nach einem der Ansprüche 1 bis 4, wobei das nicht wässrige Lösungsmittel zumindest eines ist, ausgewählt aus der Gruppe, bestehend aus Propylencarbonat, Ethylencarbonat, Diethylcarbonat, Dimethylcarbonat und Ethylmethylcarbonat.

6. Elektrolyt für eine Batterie mit nicht wässrigem Elektrolyten nach einem der Ansprüche 1 bis 5, wobei die Zusatzmenge der Siloxanverbindung in einem Bereich von 0,01-5,0 Masse-% zu einer Gesamtmenge des Elektrolyten für die Batterie mit nicht wässrigem Elektrolyten liegt.

7. Batterie mit nicht wässrigem Elektrolyten, die mit zumindest einer Kathode, einer Anode und einem Elektrolyten für eine Batterie mit nicht wässrigem Elektrolyten ausgestattet ist, wobei die Batterie mit nicht wässrigem Elektrolyten **dadurch gekennzeichnet ist, dass** der Elektrolyt für die Batterie mit nicht wässrigem Elektrolyten der Elektrolyt für eine Batterie mit nicht wässrigem Elektrolyten nach einem der Ansprüche 1 bis 6 ist.

## Revendications

1. Electrolyte non aqueux pour batterie à électrolyte non aqueux contenant un solvant non aqueux et un soluté, l'électrolyte non aqueux pour batterie à électrolyte non aqueux contenant au moins de l'hexafluorophosphate de lithium à titre de soluté, l'électrolyte pour batterie à électrolyte non aqueux contenant au moins un composé de siloxane,
**caractérisé en ce que** ledit au moins composé de siloxane est un composé répondant à l'une des formules chimiques suivantes :

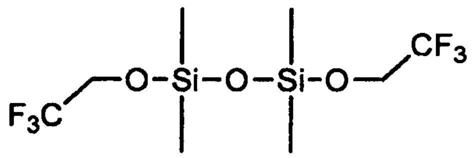
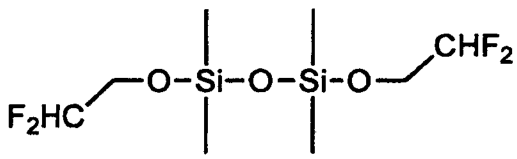

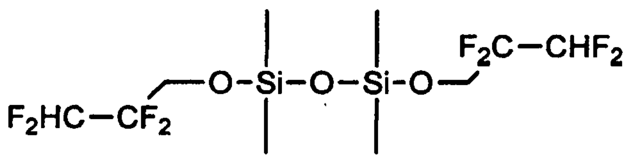

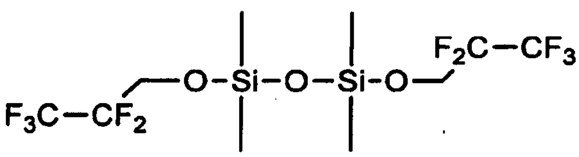
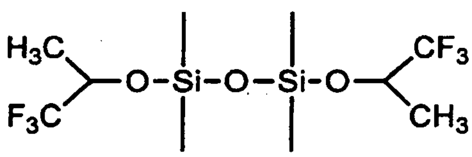

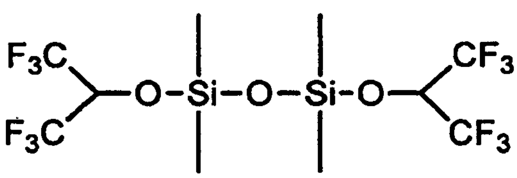
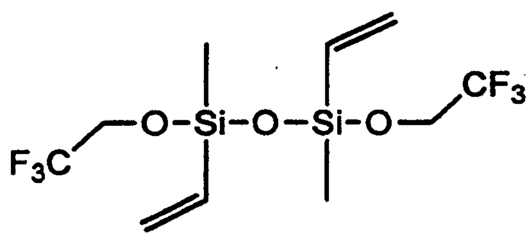

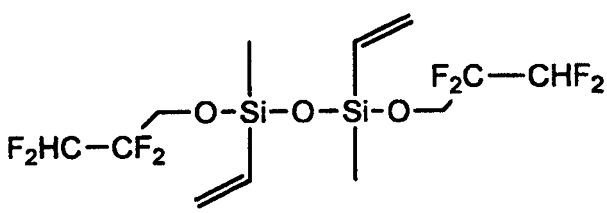

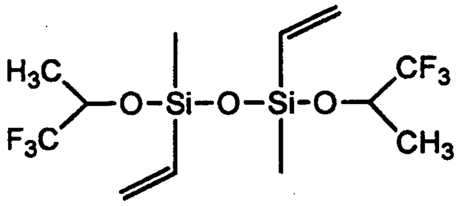

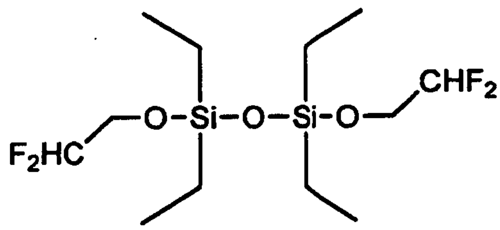

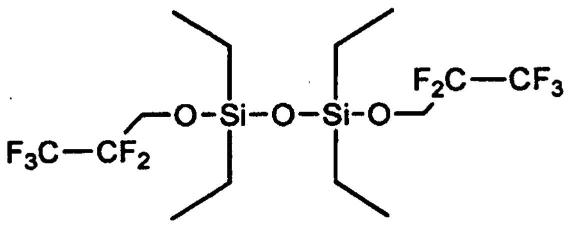

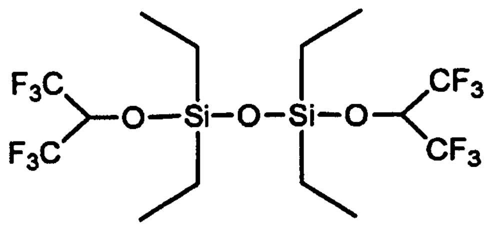

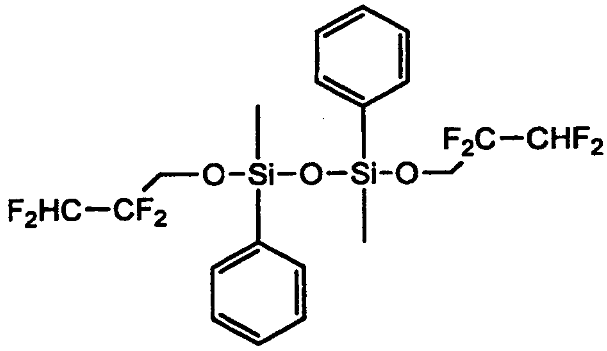

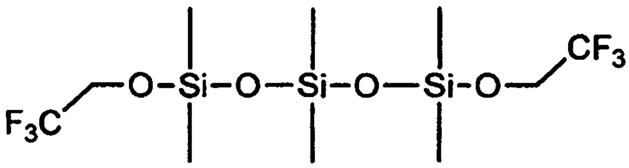

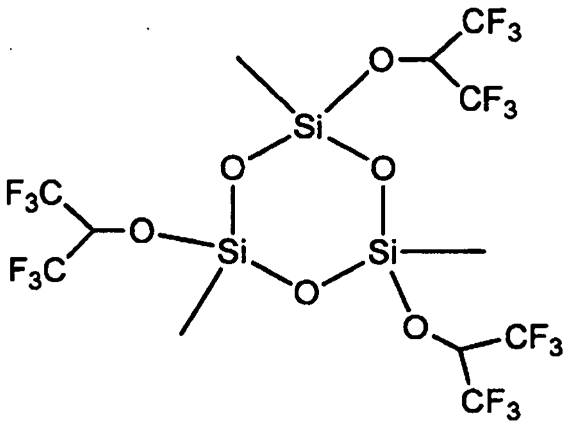

.

**2.** Electrolyte pour batterie à électrolyte non aqueux selon la revendication 1, dans lequel, à titre de soluté, au moins un soluté choisi dans le groupe constitué par le tétrafluoroborate de lithium ($LiBF_4$), le bis(fluoro-sulfonyl)imide de lithium ($LiN(FSO_2)_2$), le bis(trifluoro-méthanesulfonyl)imide de lithium ($LiN(CF_3SO_2)_2$), le difluorophosphate de lithium ($LiPO_2F_2$), le difluoro-(bis(oxalato))phosphate de lithium ($LiPF_2(C_2O_4)_2$), le tétrafluoro(oxalato)phosphate de lithium ($LiPF_4(C_2O_4)$), le difluoro(oxalato)borate de lithium ($LiBF_2(C_2O_4)$) et le bis(oxalato)borate de lithium

($LiB(C_2O_4)_2$) est amené à coexister avec l'hexafluorophosphate de lithium.

**3.** Electrolyte pour batterie à électrolyte non aqueux selon la revendication 1 ou la revendication 2, dans lequel la concentration du soluté est dans une plage de 0,5 à 2,5 mol/l.

**4.** Electrolyte pour batterie à électrolyte non aqueux selon l'une quelconque de la revendication 1 à la revendication 3, dans lequel le solvant non aqueux est au moins un solvant choisi dans le groupe constitué par les carbonates cycliques, les carbonates de type à chaîne, les esters cycliques, les esters de type à chaîne, les éthers cycliques, les éthers de type à chaîne, les sulfones ou les composés de sulfoxyde et les liquides ioniques.

**5.** Electrolyte pour batterie à électrolyte non aqueux selon l'une quelconque de la revendication 1 à la revendication 4, dans lequel le solvant non aqueux est au moins un solvant choisi dans le groupe constitué par le carbonate de propylène, le carbonate d'éthylène, le carbonate de diéthyle, le carbonate de diméthyle, et le carbonate d'éthylméthyle.

**6.** Electrolyte pour batterie à électrolyte non aqueux selon l'une quelconque de la revendication 1 à la revendication 5, dans lequel la quantité d'ajout du composé de siloxane est dans une plage de 0,01 à 5,0 % en poids de la quantité totale de l'électrolyte pour batterie à électrolyte non aqueux.

**7.** Batterie à électrolyte non aqueux équipée d'au moins une cathode, une anode et un électrolyte pour batterie à électrolyte non aqueux, la batterie à électrolyte non aqueux étant **caractérisée en ce que** l'électrolyte pour batterie à électrolyte non aqueux est l'électrolyte pour batterie à électrolyte non aqueux selon l'une quelconque de la revendication 1 à la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012039251 A1
- JP 2012089468 A
- US 2010015514 A1
- US 2012082890 A1
- US 20050170254 A1
- JP 2011054406 A
- US 20110206997 A1
- JP 10326611 A
- JP 11016602 A
- JP 8078053 A
- JP 2002134169 A
- JP 2004071458 A
- JP 2007141831 A
- JP 2010092748 A